(19) Europäisches Patentamt
European Patent Office
Office européen des brevets

(11) **EP 2 759 613 B1**

(12) **EUROPEAN PATENT SPECIFICATION**

(45) Date of publication and mention
of the grant of the patent:
**05.10.2016 Bulletin 2016/40**

(21) Application number: **12847373.3**

(22) Date of filing: **06.11.2012**

(51) Int Cl.:
*C22C 38/00* (2006.01)    *C21D 9/46* (2006.01)
*C22C 18/04* (2006.01)    *C22C 38/14* (2006.01)
*C22C 38/60* (2006.01)    *C23C 2/06* (2006.01)
*B32B 15/01* (2006.01)    *C21D 8/02* (2006.01)
*C21D 8/04* (2006.01)    *C23C 2/02* (2006.01)
*C22C 38/02* (2006.01)    *C22C 38/06* (2006.01)
*C22C 38/08* (2006.01)    *C22C 38/10* (2006.01)
*C22C 38/12* (2006.01)    *C22C 38/16* (2006.01)
*C22C 38/24* (2006.01)    *C22C 38/26* (2006.01)
*C22C 38/28* (2006.01)    *C22C 38/04* (2006.01)

(86) International application number:
**PCT/JP2012/007088**

(87) International publication number:
**WO 2013/069251 (16.05.2013 Gazette 2013/20)**

(54) **HIGH-TENSILE-STRENGTH HOT-ROLLED STEEL SHEET AND METHOD FOR PRODUCING SAME**

HEIZGEWALZTES STAHLBLECH MIT HOHER BRUCHFESTIGKEIT UND VERFAHREN ZU SEINER HERSTELLUNG

TÔLE EN ACIER LAMINÉE À CHAUD DE FORCE DE TRACTION ÉLEVÉE, ET PROCÉDÉ DE FABRICATION DE CELLE-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.11.2011   JP 2011244269**

(43) Date of publication of application:
**30.07.2014  Bulletin 2014/31**

(73) Proprietor: **JFE Steel Corporation**
**Tokyo, 100-0011 (JP)**

(72) Inventors:
• **ARIGA, Tamako**
**Tokyo 100-0011 (JP)**

• **FUNAKAWA, Yoshimasa**
**Tokyo 100-0011 (JP)**
• **UCHIDA, Yasunobu**
**Tokyo 100-0011 (JP)**

(74) Representative: **Hoffmann Eitle**
**Patent- und Rechtsanwälte PartmbB**
**Arabellastraße 30**
**81925 München (DE)**

(56) References cited:
**EP-A- 1 918 396      WO-A1-2011/122031
JP-A- 2005 002 406    JP-A- 2006 161 112
JP-A- 2006 161 112    JP-A- 2008 285 741
JP-A- 2009 052 139    JP-A- 2011 219 826
JP-A- 2011 225 980**

**Description**

[TECHNICAL FIELD]

The present invention relates to a high strength hot rolled steel sheet that is suitable for raw material of transportation equipment such as a component for automobile and a structural material or similar material, features excellent formability, in particular, excellent stretch-flange formability, bending characteristics, and material stability, and has a tensile strength (TS) of 980 MPa or more. The present invention also relates to a method for producing the high strength hot rolled steel sheet.

[BACKGROUND ART]

From the aspect of global environment conservation, in order to reduce $CO_2$ emission amount, achieving weight reduction of the automobile body while maintaining its strength so as to improve fuel consumption of the automobile has been extremely important problem in the automobile industry. In order to achieve weight reduction of the automobile body while maintaining the strength of the automobile body, it is effective to increase the strength of a steel sheet to be a raw material for automobile components so as to provide a thinned steel sheet. Therefore, decently, high tensile strength steel sheets have been actively used for automobile components. In the automobile industry, for example, as raw materials for underbody components, application of steel sheets with tensile strength (TS) of 780 MPa level or more and, further, tensile strength (TS) of 980 MPa level or more have been considered.

On the other hand, most of the automobile components using a steel sheet as raw material are shaped by press processing, burring processing, or similar processing. Therefore, it is required to stably achieve the steel sheet for automobile components having excellent formability (stretch-flange formability and bending formability). Press forming a steel sheet of partially different strength changes an amount of springback in proportion to the strength, resulting in kink of components. Accordingly, to obtain components with desired strength and accuracy of dimensions and form, it is extremely important that strength and formability of a steel sheet employed as a raw material be uniformed in the width direction of the steel sheet.

Regarding a technique to achieve high strengthening of steel sheet while ensuring excellent formability, for example, Patent Literature 1 proposes a technique providing a high strength hot-rolled steel sheet that contains, by mass%, C: 0.08 to 0.20%, Si: 0.001% or more to less than 0.2%, Mn: more than 1.0% to 3.0% or less, Al: 0.001 to 0.5%, V: more than 0.1% to 0.5% or less, Ti: 0.05% or more to less than 0.2%, and Nb: 0.005 to 0.5%, and satisfies the following three expressions: (Expression 1) $(Ti/48 + Nb/93) \times C/12 \leq 4.5 \times 10^{-5}$, (Expression 2) $0.5 \leq (V/51 + Ti/48 + Nb/93)/(C/12) \leq 1.5$, and (Expression 3) $V + Ti \times 2 + Nb \times 1.4 + C \times 2 + Mn \times 0.1 \geq 0.80$. Balance is Fe and inevitable impurities. The high strength hot-rolled steel sheet has a steel sheet structure where ferrite with an average grain size of 5 $\mu$m or less and hardness of 250 Hv or more is contained 70 volume % or more. The high strength hot-rolled steel sheet has a strength of 880 MPa or more and a yield ratio of 0.80 or more.

Patent Literature 2 proposes a technique providing a high strength steel sheet that has a chemical composition contains, by mass%, C: 0.02% or more to 0.20% or less, Si: 0.3% or less, Mn: 0.5% or more to 2.5% or less, P: 0.06% or less, S: 0.01% or less, Al: 0.1% or less, Ti: 0.05% or more to 0.25% or less, V: 0.05% or more to 0.25% or less. Balance is Fe and inevitable impurities. The high strength steel sheet has a substantial ferrite single-phase structure and contains precipitates having a size of less than 20 nm. The precipitates contains 200 mass ppm or more to 1750 mass ppm or less Ti and 150 mass ppm or more to 1750 mass ppm or less V. Solid solution V is 200 mass ppm or more to less than 1750 mass ppm. This technique provides a high strength steel sheet having excellent stretch-flange characteristics after processing and corrosion resistance after painting.

In the technique described in Patent Literature 2, a precipitate in a steel sheet is fine-grained (size of less than 20 nm) to enhance strength of the steel sheet. In the technique described in Patent Literature 2, as a precipitate that allows maintaining the precipitate contained in steel sheet to be fine, the precipitate containing Ti and V is employed. Additionally, by designing an amount of solid solution V contained in the steel sheet to a desired range, stretch-flange characteristics after processing is improved. According to the technique described in Patent Literature 2, this obtains a high strength hot rolled steel sheet that is excellent in stretch-flange formability after processing and corrosion resistance after painting and has a tensile strength of 780 MPa or more.

WO2011122031 discloses a hot-rolled steel sheet with high tensile strength that is provided with both strength and processability (elongation and stretch flangeability) and a method for producing the same. Specifically disclosed is a hot-rolled steel sheet with high tensile strength that has tensile strength of 980 MPa or greater and superior processability. This hot-rolled steel sheet has a composition containing 0.07 - 0.13% C, 0.3% or less Si, 0.5 - 2.0% Mn, 0.025% or less P, 0.005% or less S, 0.0060% or less N, 0.06% or less Al, 0.08 - 0.14% Ti, and 0.15 - 0.30% V (% by mass) such that C, Ti, V, S and N satisfy $Ti = 0.08 + (N/14\ 48 + S/32\ 48)$ and $0.8 = (Ti/48 + V/51)/(C/12) = 1.2$ (wherein C, Ti, V, S and N are the content for each element in % by mass). The composition further contains 0.04 - 0.1% V in solid solution and 0.05% or less Ti in solid solution, and the remainder is Fe and unavoidable impurities. The hot-rolled steel sheet has a matrix that is 97% or more in areal proportion of the overall structure of the ferrite phase, and fine carbide that has an average particle diameter of less than 10 nm and contains Ti and V is dispersed and precipitated, with a structure forming 0.007 or more in areal proportion of the overall structure of that fine carbide.

[CITATION LIST]

[PATENT LITERATURE]

[Patent Literature 1] Japanese Unexamined Patent Application Publication No. 2006-161112
[Patent Literature 2] Japanese Unexamined Patent Application Publication No. 2009-052139

[SUMMARY OF INVENTION]

[TECHNICAL PROBLEM]

However, in the technique proposed in Patent Literature 1, stretch-flange formability is not considered. Accordingly, with the technique proposed in Patent Literature 1, to ensure a tensile strength of 780 MPa or more, a steel sheet structure is required to be a complex structure of a ferrite phase and a hard phase. However, performing burring processing on a steel sheet with such complex structure, a crack is initiated at an interface between the ferrite phase and the hard phase. That is, with the technique proposed in Patent Literature 1, to ensure a tensile strength of 780 MPa or more, or further 980 MPa or more, there is a problem that sufficient stretch-flange formability cannot be always obtained. Additionally, controlling the second phase (the hard phase) is difficult. Accordingly, it is extremely difficult to produce a uniform material.

Meanwhile, according to the technique proposed in Patent Literature 2, specifying a precipitate of less than 20 nm ensures manufacturing hot-rolled steel sheets featuring excellent formability (elongation and stretch-flange formability) and strength up to about 780 MPa level. However, in strengthening of a steel sheet with precipitate, precipitate with finer particle size, which is less than 10 nm, is the main part of the strengthening mechanism. Accordingly, as the technique proposed in Patent Literature 2, specification of precipitate of less than 20 nm alone cannot obtain sufficient precipitation strengthening. It is difficult to produce a steel sheet with tensile strength of 980 MPa or more. Coexisting precipitates of 20 nm to several nm makes an amount of strengthening with precipitate instable. There is a problem that strength in a steel sheet width direction does not become uniform.

As described above, with the conventional techniques, obtaining high tensile strength steel sheets with stable strength and excellent stretch-flange formability is extremely difficult. The present invention advantageously solves the problems with the conventional techniques described above, and an object of the present invention is to provide a high strength hot rolled steel sheet and a method for manufacturing the high strength hot rolled steel sheet that is suitable for transportation equipment and structural materials, in particular, automobile components, and has a tensile strength of 980 MPa or more, excellent formability (in particular, stretch-flange formability and bending formability), and excellent uniformity in strength and formability.

[SOLUTION TO PROBLEM]

Long and intensive research was carried out by the inventors of the present invention on various factors affecting high strengthening and formability such as stretch-flange formability and bending formability of a hot-rolled steel sheet and material stability in width direction of the hot-rolled steel sheet in order to solve the above problems. As a result, the following findings were obtained.

1) Designing the steel sheet structure to have a ferrite single-phase structure with low dislocation density and excellent formability and further precipitation strengthening by dispersed precipitation of the fine carbide improve the strength of the hot-rolled steel sheet and obtain excellent stretch-flange formability.
2) To obtain a hot-rolled steel sheet with excellent formability and a high strength of a tensile strength of 980 MPa or more, it is necessary to dispersedly precipitate fine carbide where the average particle size effective for precipitation strengthening is less than 10 nm at a desired volume fraction.
3) As the fine carbide that contributes to precipitation strengthening, carbide containing Ti and V is effective from the aspect of achieving strength or similar purpose.
4) To provide stable strength to the hot-rolled steel sheet, reduction of carbide with particle size of 30 nm or more, which does not contribute to precipitation strengthening, is effective.

5) To uniform the strength of hot-rolled steel sheet in a width direction, contents of Ti and V, which are precipitation strengthening elements, are specified. This is effective for reducing a structural change at an end of the steel sheet in the width direction and for reducing deterioration of strength.

6) The presence of a predetermined amount of solid solution V in the hot-rolled steel sheet stably improves bending formability of the steel sheet.

7) To substantially design a matrix in a steel sheet structure as a ferrite single-phase and to dispersedly precipitate fine carbide containing Ti and V of less than 10 nm as described above at a desired volume fraction, controlling a coiling temperature during manufacturing the hot-rolled steel sheet to be a predetermined temperature is important.

The present invention was completed based on the above-described findings, and the following is the gist of the present invention.

[1] A high strength hot rolled steel sheet includes a chemical composition and a structure (microstructure). The composition consists of: C: more than 0.05% to 0.13% or less; Si: 0.3% or less; Mn: 0.5% or more to 2.0% or less; P: 0.025% or less; S: 0.005% or less; N: 0.0060% or less; Al: 0.1% or less; and Ti: 0.07% or more to 0.18% or less, V: more than 0.13% to 0.30% or less on a mass percent basis, such that Ti and V contents satisfy the following formula (1), optionally at least one selected from the group consisting of Nb and Mo by 1% or less in total on a mass percent basis, and optionally at least one selected from the group consisting of Cu, Sn, Ni, Ca, Mg, Co, As, Cr, W, B, Pb, Ta, and Sb by 1% or less in total on a mass percent basis, the solid solution V is 0.05% or more to less than 0.15%, and the balance is Fe and inevitable impurities. A matrix has a ferrite phase with an area ratio of 95% or more with respect to an overall structure. In the structure, fine carbide is dispersedly precipitated. The fine carbide contains Ti and V has an average particle size of less than 10 nm in the matrix. The fine carbide has a volume fraction of 0.0050 or more with respect to the overall structure. A proportion of a number of carbides with particle size of 30 nm or more containing Ti is less than 10% with respect to a total number of carbides. The high strength hot rolled steel sheet has a tensile strength of 980 MPa or more. The high strength hot rolled steel sheet has a hole expansion ratio of 40% or more. The high strength hot rolled steel sheet has a ratio of limit bending radius of 0.9 or less. Further, a difference in a tensile strength between a center position of a sheet width and a position at one-quarter width of the steel sheet is 15 MPa or less, a difference in a hole expansion ratio among the positions is 10% or less, and a difference in a ratio of limit bending radius among the positions is 0.15 or less.

$$0.25 < Ti + V \le 0.45 \ \dots \ (1)$$

(where Ti and V are respective contents of the elements (by mass%))

[2] In the high strength hot rolled steel sheet according to [1], the chemical composition contains at least one selected from a group consisting of Nb and Mo by 1% or less in total on a mass percent basis.

[3] In the high strength hot rolled steel sheet according to [1], the chemical composition contains at least one selected from a group consisting of Cu, Sn, Ni, Ca, Mg, Co, As, Cr, W, B, Pb, Ta, and Sb by 1% or less in total on a mass percent basis.

[4] In the high strength hot rolled steel sheet according to [2], the chemical composition contains at least one selected from a group consisting of Cu, Sn, Ni, Ca, Mg, Co, As, Cr, W, B, Pb, Ta, and Sb by 1% or less in total on a mass percent basis.

[5] The high strength hot rolled steel sheet according to any one of [1] to [4] further include a plating layer formed at a surface of the high strength hot rolled steel sheet.

[6] The method for producing a high strength hot rolled steel sheet with a tensile strength of 980 MPa or more includes: preparing, hot-rolling, cooling, and coiling. The preparing prepares a steel material with a component chemical according to any one of [1] to [4]. The hot-rolling hot-rolls the steel material including rough rolling and finish rolling at a rolling temperature of 880°C or more to form a hot-rolled steel sheet. The cooling cools the hot-rolled steel sheet at an average cooling rate of 10°C/sec. or more subsequent to completion of the finish rolling. The coiling coils the hot-rolled steel sheet at 550°C or more to less than 700°C.

[7] The method according to [6] further includes plating a surface of the hot-rolled steel sheet subsequent to the coiling.

[ADVANTAGEOUS EFFECTS OF INVENTION]

The present invention ensures industrially stable production of a high strength hot rolled steel sheet with excellent formability, a strength of tensile strength of 980 MPa or more, and excellent material stability. The high strength hot rolled steel sheet is suitable for a raw material for automobile components with a complicated cross-sectional shape when pressing, thus providing an industrially useful effect.

[DESCRIPTION OF EMBODIMENTS]

Hereinafter, the present invention will be described in detail.

Firstly, reasons for limiting the structure of the steel sheet of the present invention will be described. The present invention provides a hot-rolled steel sheet that has a matrix with an area ratio of a ferrite phase of 95% or more with respect to an overall structure. Fine carbide with average particle size of less than 10 nm containing Ti and V is dispersedly precipitated in the matrix. The fine carbide has a volume fraction of 0.0050 or more with respect to the overall structure. A proportion of the number of carbides with particle size of 30 nm or more containing Ti is less than 10% with respect to the total number of carbides. The hot-rolled steel sheet may have a plating layer on the surface of the hot-rolled steel sheet.

Ferrite phase: the area ratio of 95% or more with respect to the overall structure In the present invention, to maintain formability (stretch-flange formability) of the hot-rolled steel sheet, a ferrite phase is necessary to be formed. For improving the formability of the hot-rolled steel sheet, it is effective to achieve a ferrite phase with a low dislocation density and excellent ductility as the structure of the hot-rolled steel sheet. In particular, it is preferred to have a ferrite single-phase as the structure of the hot-rolled steel sheet for improving the stretch-flange formability. However, even in the case where the structure of hot-rolled steel sheet is not a complete ferrite single-phase, it is only necessary to have a substantially ferrite single-phase structure; that is, to have a ferrite phase with an area ratio of 95% or more with respect to the overall structure in order to sufficiently provide the above-described effects. Accordingly, the area ratio of the ferrite phase with respect to the overall structure is preferably to be 95% or more, more preferably, 97% or more.

In the hot-rolled steel sheet of the present invention, the structure other than the ferrite phase employs cementite, pearlite, a bainite phase, a martensite phase, a retained austenite phase, and a similar phase. The acceptable sum of these phases is area ratio of 5% or less with respect to the overall structure.

Fine carbide containing Ti and V

The carbide containing Ti and V is more likely to be fine carbide with an extremely small average particle size. Therefore, in the present invention that increases the strength of the hot-rolled steel sheet by dispersedly precipitating the fine carbide in the hot-rolled steel sheet, the fine carbide to be dispersedly precipitated is preferred to be fine carbide containing Ti and V.

Conventionally, for high strengthening of the steel sheet, use of Ti carbide not containing V was the mainstream. In contrast, the present invention features use of carbide containing V in addition to Ti.

Ti easily forms carbide. Therefore, Ti carbide without V is likely to be coarse and less contributes to high strengthening of the steel sheet. Accordingly, to provide a desired strength (tensile strength: 980 MPa or more) to the steel sheet, adding more Ti and forming Ti carbide are necessary. On the other hand, excessive addition of Ti may cause reduction of formability (stretch-flange formability). This fails to obtain excellent formability applicable to a raw material for underbody components with a complicated cross-sectional shape or similar component.

On the other hand, tendency that V forms carbide is lower than that of Ti. Accordingly, the use of V is effective to reduce coarsening of carbide. Therefore, the present invention employs a compound carbide that contains both Ti and V as carbide to be dispersedly precipitated. In the present invention, the fine carbide containing Ti and V does not mean carbide where each individual carbide (i.e. Ti carbide or V carbide) is separately contained in a structure, but a compound carbide containing both Ti and V in one fine carbide.

Average particle size of fine carbide containing Ti and V: less than 10 nm

The average particle size of the fine carbide is extremely important to give a desired strength to a hot-rolled steel sheet. One feature of the present invention is that the average particle size of the fine carbide containing Ti and V is designed to be less than 10 nm. When the fine carbide is precipitated in the matrix, this fine carbide acts as a resistance to movement of dislocations occurring when the steel sheet is deformed. This action strengthens the hot-rolled steel sheet. The effect becomes remarkable with smaller fine carbide. Designing the average particle size of the fine carbide to less than 10 nm makes the above-described action to be further remarkable. Accordingly, the average particle size of the fine carbide containing Ti and V is preferably to be less than 10 nm, more preferably, 5 nm or less.

Volume fraction of fine carbide containing Ti and V with respect to the overall structure: 0.0050 or more

To give a desired strength to the hot-rolled steel sheet (a tensile strength: 980 MPa or more), a dispersed precipitation state of the fine carbide containing Ti and V is extremely important. In the present invention, the fine carbide that contains Ti and V with average particle size of less than 10 nm is dispersedly precipitated such that the structure fraction of fine carbide with respect to the overall structure becomes 0.0050 or more in volume fraction. If the volume fraction is less than 0.0050, even if the average particle size of the fine carbide containing Ti and V is less than 10 nm, the amount of the fine carbide is little. Accordingly, it is difficult to reliably ensure the desired hot-rolled steel sheet strength (tensile strength: 980 MPa or more). Accordingly, it is preferred that the volume fraction be 0.0050 or more, more preferably, 0.0070 or more.

In the present invention, although precipitation in rows, which is a main precipitation state, is mixed with random precipitation of the fine carbide as a precipitation state of the fine carbide containing Ti and V, this does not have any influence on the characteristics. Various precipitation states are collectively referred to as dispersed precipitation regardless of the state of precipitation.

Proportion of the number of carbides with particle size of 30 nm or more containing Ti with respect to the total number of carbides: less than 10%

If a steel sheet contains carbide with particle size of 30 nm or more containing Ti, the steel sheet strength becomes unstable and formability (stretch-flange formability) also becomes unstable. Therefore, if such coarse carbide is present much, the above-described effects of the present invention are not achieved. Accordingly, it is preferred that a proportion of the number of carbides with particle size of 30 nm or more containing Ti with respect to the total number of carbides be less than 10%, more preferably, 5% or less.

Next, reasons for limiting the chemical composition of the hot-rolled steel sheet of the present invention will be described. Hereinafter, "%" used for the chemical composition means "mass%", unless otherwise stated.

C: more than 0.05% and 0.13% or less

C is a necessary element to form the fine carbide and strengthen the steel. If the C content is 0.05% or less, the fine carbide with desired structure fraction cannot be obtained, and a tensile strength of 980 MPa or more cannot be obtained. On the other hand, if the C content exceeds 0.13%, the strength excessively increases, and the formability (stretch-flange formability and bending formability) is deteriorated. Accordingly, the C content is preferably more than 0.05% to 0.13 or less, more preferably, 0.07% or more to 0.11% or less.

Si: 0.3% or less

Si is a solid-solution strengthening element, and is an element effective for high strengthening of the steel. However, if the Si content exceeds 0.3%, the C precipitation from the ferrite phase is promoted and coarse Fe carbide is likely to precipitate at the grain boundary. This reduces the stretch-flange formability. Additionally, excessive Si content adversely affects plating performance of the steel sheet. Accordingly, the Si content is preferably to be 0.3% or less, more preferably, 0.05% or less.

Mn: 0.5% or more to 2.0% or less

Mn is a solid-solution strengthening element, and is an element effective for high strengthening of the steel. Mn is also an element that lowers an $Ar_3$ transformation temperature of a steel. If the Mn content is less than 0.5%, the $Ar_3$ transformation temperature becomes high. Accordingly, the carbide containing Ti is not sufficiently fine-grained, and also an amount of solid solution strengthening is not enough, thus failing to obtain a tensile strength of 980 MPa or more. On the other hand, if the Mn content exceeds 2.0%, segregation becomes remarkable and a phase other than the ferrite phase, that is, a hard phase is formed. This reduces the stretch-flange formability. Accordingly, the Mn content is preferably to be 0.5% or more to 2.0% or less, more preferably, 1.0% or more to 1.8% or less.

P: 0.025% or less

P is a solid-solution strengthening element, and an element effective for high strengthening of the steel. However, if the P content exceeds 0.025%, segregation becomes remarkable. This reduces the stretch-flange formability. Accordingly, the P content is preferably to be 0.025% or less, more preferably, 0.02% or less.

S: 0.005% or less

S is an element that reduces the hot workability (hot rolling property) and increases the hot crack sensitivity of the slab. Additionally, S is present as MnS in the steel, thus deteriorating the formability (the stretch-flange formability) of the hot-rolled steel sheet. S forms TiS in the steel and reduces Ti precipitated as fine carbide. Accordingly, in the present invention, S is reduced as much as possible. The S content is preferably to be 0.005% or less.

N: 0.0060% or less

N is a harmful element in the present invention, and is preferred to be reduced as much as possible. In particular, if the N content exceeds 0.0060%, coarse nitride is generated in the steel. This reduces the stretch-flange formability. Accordingly, the N content is preferably to be 0.0060% or less.

Al: 0.1% or less

Al is an element acting as a deoxidizer. To obtain this effect, the Al content is preferred to be 0.001% or more. However, if the Al content exceeds 0.1%, the stretch-flange formability is reduced. Therefore, the Al content is preferably to be Al: 0.1% or less.

Ti: 0.07% or more to 0.18% or less

Ti is one of important elements in the present invention. Ti is an element that contributes to high strengthening of the steel sheet while obtaining excellent formability (stretch-flange formability) by forming compound carbide with V. If the Ti content is less than 0.07%, a desired strength of the hot-rolled steel sheet cannot be obtained. On the other hand, if the Ti content exceeds 0.18%, coarse TiC (carbide containing Ti) is likely to be precipitated, thus making the strength of steel sheet unstable. Accordingly, the Ti content is preferably to be 0.07% or more to 0.18% or less, more preferably, 0.10% or more to 0.16% or less.

V: more than 0.13% to 0.30% or less

V is one of important elements in the present invention. As described above, V is an element that contributes to high strengthening of the steel sheet while obtaining excellent elongation and stretch-flange formability by forming compound carbide with Ti. V is an extremely important element that stably achieves excellent mechanical characteristics (strength) of the steel sheet of the present invention by forming compound carbide with Ti and contributes to material uniformity of the steel sheet. If the V content is 0.13% or less, a coarse TiC, which adversely affects strength of steel sheet, stretch-flange formability, and material uniformity, is likely to be generated. On the other hand, if the V content exceeds 0.30%, the strength becomes excessively high, thus resulting in deterioration of formability (stretch-flange formability). Accordingly, the V content is preferably to be more than 0.13% to 0.30% or less.

The hot-rolled steel sheet of the present invention contains Ti and V such that the formula (1) is satisfied within the above-described range.

$$0.25 < Ti + V \leq 0.45 \ldots (1)$$

(where Ti and V are respective contents of the elements (by mass%)) The above-described formula (1) is a condition to be satisfied for providing the steel sheet with stable strength and formability (stretch-flange formability and bending formability). If the total content of Ti and V becomes 0.25% or less, designing a volume fraction of the fine carbide containing Ti and V with respect to the overall structure to 0.0050 or more is difficult. On the other hand, if the total content of Ti and V exceeds 0.45%, a steel sheet strength becomes excessively high, resulting in deterioration of formability (stretch-flange formability). Accordingly, it is preferred that the total content (%) of Ti and V be more than 0.25% to 0.45% or less. This makes generation of coarse TiC in the steel sheet difficult. Thus, the fine carbide containing Ti and V is generated at a desired volume fraction, stabilizing steel sheet strength and also stabilizing formability (stretch-flange formability and bending formability).

Solid solution V: 0.05% or more to less than 0.15%

Solid solution V is mainly dissolves into a ferrite grain boundary and strengthens the grain boundary. This effectively acts on formability of the steel sheet extremely, in particular, improvement of bending formability. In V contained in the hot-rolled steel sheet, if the content of the solid solution V is less than 0.05%, the above-described effect is not sufficiently expressed. On the other hand, if the content of the solid solution V is 0.15% or more, fine carbide containing Ti and V, which is required to obtain the desired steel sheet strength (tensile strength :980 MPa or more), cannot be sufficiently obtained. Accordingly, in V contained in the hot-rolled steel sheet, the amount of solid solution V is preferably to be 0.05% or more to less than 0.15%.

The compositions described above are basic compositions in the present invention. In addition to the above-described basic compositions, at least one selected from the group consisting of Nb and Mo can be contained by 1% or less in total. Nb and Mo form a compound carbide by composite precipitation together with Ti and V and contribute to obtaining a desired strength. Therefore, Nb and Mo can be contained as necessary. To obtain such effect, it is preferred that Nb and Mo be contained 0.005% or more in total. However, since excessively containing Nb and Mo tends to deteriorate elongation, it is preferred that the total amount of any one or two of Nb and Mo be 1% or less, more preferably, 0.5% or less.

In addition to the above-described basic compositions, at least one selected from the group consisting of Cu, Sn, Ni, Ca, Mg, Co, As, Cr, W, B, Pb, Ta, and Sb may be contained by 1% or less in total, preferably, 0.5% or less. As constituents other than ones described above, Fe and the unavoidable impurities are contained.

In the present invention, a plating layer may be formed at a surface of a hot-rolled steel sheet with the above-described structure and composition. The type of plating layer is, not specifically limited. Any conventionally known layer such as an electroplated layer, a hot-dip galvanized layer, and a hot-dip galvannealed layer is applicable.

Next, a description will be given of a method for producing the hot-rolled steel sheet of the present invention. Hot rolling that includes rough rolling and finish rolling is performed on the steel material (semi-manufactured steel material). After the finish rolling is terminated, cooling and coiling are performed to obtain a hot-rolled steel sheet. At this time, the finish rolling temperature of the finish rolling is designed to be 880°C or more, the average cooling rate of the cooling is designed to be 10°C/sec. or more, and the coiling temperature of the coiling is designed to be 550°C or more to less than 700°C. A plating process may be performed on the hot-rolled steel sheet thus obtained.

In the present invention, the method for smelting the semi-manufactured steel material is not specifically limited and can employ a known smelting method using a converter, an electric furnace, or similar furnace. After the smelting, in consideration of segregation and similar problem, a slab (semi-manufactured steel material) is preferred to be obtained by a continuous casting method. The slab may be obtained by a known casting method such as an ingot-slab making method and a thin slab continuous casting method. To hot-roll the slab after the casting, the slab may be rolled after being reheated in a heating furnace. In the case where the temperature is held at a predetermined temperature or more, the slab may be directly rolled without heating the slab.

Rough rolling and finish rolling are performed on the semi-manufactured steel material obtained as described above. However, in the present invention, it is preferred that carbide be dissolved in the semi-manufactured steel material before rough rolling. In the present invention where Ti and V, which are carbide-forming elements, are contained, a heating temperature of the steel semi-manufactured material is preferred to be 1150°C or more to 1300°C or less. As described above, in the case where the semi-manufactured steel material before rough rolling is held at a temperature of a predetermined temperature or more and the carbide in the semi-manufactured steel material is dissolved, the process for heating the semi-manufactured steel material before rough rolling can be omitted. Here, it is not necessary to specifically limit the rough rolling conditions.

Finish rolling temperature: 880°C or more

Optimization of the finish rolling temperature is important to maintain stretch-flange formability and bending formability of the hot-rolled steel sheet and to reduce the rolling load of finish rolling. A finish rolling temperature of less than 880°C results in large grains of crystal grains in the surface layer of the hot-rolled steel sheet and deterioration in formability (stretch-flange formability and bending formability) of the steel sheet. Accordingly, the finish rolling temperature is preferably to be 880°C or more, more preferably, 900°C or more. An excessively high finish rolling temperature tends to generate a flaw due to secondary scale at the surface of the steel sheet. Thus, the finish rolling temperature is preferred to be 1000°C or less.

Average cooling rate: 10°C/sec. or more

After the finish rolling is terminated, an average cooling rate from a finish rolling temperature to the coiling temperature of less than 10°C/sec. results in a high $Ar_3$ transformation temperature , thus the carbide containing Ti and V cannot be sufficiently fine-grained. Accordingly, the above-described average cooling rate is preferably to be 10°C/sec. or more, more preferably, 30°C/sec. or more.

Coiling temperature: 550°C or more to less than 700°C

Optimization of the coiling temperature is extremely important to achieve, as a structure of the hot-rolled steel sheet, a desired structure over entire region in the width direction of the steel sheet, that is, a matrix in which the area ratio of a ferrite phase is 95% or more with respect to the overall structure and a structure in which fine carbide, which contains Ti and V and has an average particle size of less than 10 nm, is dispersedly precipitated, and carbide with particle size of 30 nm or more containing Ti is reduced.

If the coiling temperature is less than 550°C, the precipitation of the fine carbide containing Ti and V becomes insufficient, failing to obtain the desired steel sheet strength. On the other hand, if the coiling temperature becomes 700°C or more, the average particle size of the fine carbide containing Ti and V is increased. In this case as well, the desired steel sheet strength cannot be obtained. Accordingly, the coiling temperature is preferably to be 550°C or more to less than 700°C, more preferably, 600°C or more to 650°C or less.

In the present invention, a plating process may be performed on the hot-rolled steel sheet obtained as described above, and a plating layer may be formed on a surface of the hot-rolled steel sheet. The type of plating process is not specifically limited. A plating process such as a hot-dip galvanizing process and hot-dip galvannealing process can be performed in accordance with conventionally known methods.

As described above, in order to produce a high strength hot rolled steel sheet that has a tensile strength of 980 MPa or more, excellent formability (stretch-flange formability and bending formability) suitable for raw material for automobile components or a similar component with a complicated cross-sectional shape, and uniform and stable material, it is important to dispersedly precipitate the fine carbide containing Ti and V with the average particle size of less than 10 nm over the entire region in the width direction of the steel sheet. It is also important to reduce precipitation of carbide with particle size of 30 nm or more containing Ti over the entire region in the width direction of the steel sheet.

In the present invention, the content of respective Ti and V in the steel, which becomes a semi-manufactured steel material for the hot-rolled steel sheet, is specified, and the total content of these elements (Ti + V) is specified to more than 0.25% to 0.45% or less. This reduces precipitation of carbide with particle size of 30 nm or more containing. Ti and controls the composition of the fine carbide such that the fine carbide with average particle size of less than 10 nm is dispersedly precipitated sufficiently. Accordingly, with the present invention, in producing a hot-rolled steel sheet, even at an end of the steel sheet in the width direction, where the material is likely to be unstable in a cooling process after completion of finish rolling, the fine carbide with average particle size of less than 10 nm can be dispersedly precipitated sufficiently. That is, the present invention allows dispersed precipitation of the fine carbide with the average particle size of less than 10 nm over the entire region in the width direction of the hot-rolled steel sheet. This provides uniform and excellent characteristics (tensile strength, stretch-flange formability, and bending formability) over the entire region in the width direction of the hot-rolled steel sheet.

[EXAMPLES]

Molten steels with compositions shown in Table 1 were smelted and subjected to continuous casting to have slabs (semi-manufactured steel materials) with a thickness of 250 mm by an ordinarily known method. These slabs were heated to 1250°C and then subjected to rough rolling and finish rolling. After the finish rolling was terminated, cooling and coiling were performed so as to obtain hot-rolled steel sheets with a sheet thickness of 2.3 mm and a sheet width of 1400 mm (hot-rolling Nos. in Table 2: 1 to 24). The finish rolling temperature at the finish rolling, the average cooling rate at the cooling (the average cooling rate from the finish rolling temperature to the coiling temperature), and the coiling temperature are as shown in Table 2.

Subsequently, some of the hot-rolled sheets obtained as described above (hot-rolling Nos. in Table 2: 3, 5, and 15) were pickled to remove the surface scale. Then, an annealing process was performed (annealing temperature: 680°C, holding time at the annealing temperature: 120 sec.). Next, the annealed hot-rolled sheet was dipped in a hot-dip galvanizing bath (plating composition: 0.1% Al-Zn, plating bath temperature: 480°C). Hot-dip galvanized films with an adhesion amount of 45 g/m$^2$ (an adhesion amount of one surface) were formed on both surfaces of the hot-rolled steel sheet. Thus, the hot-dip galvanized steel sheet was formed. Regarding one of the obtained hot-dip galvanized steel sheets (hot-rolling No. in Table 2: 5), an alloying process was performed (an alloying temperature: 520°C). Thus, a hot-dip galvannealed steel sheet was formed.

Table 1

Table 1

| Steel | Chemical component (mass%) | | | | | | | | | | | | Remarks |
|---|---|---|---|---|---|---|---|---|---|---|---|---|---|
| | C | Si | Mn | P | S | N | Al | Ti | V | Nb, Mo | Others | Ti + V | |
| a | 0.081 | 0.02 | 1.45 | 0.010 | 0.0016 | 0.0034 | 0.045 | 0.162 | 0.223 | - | Cu:0.01 | 0.385 | Example of present invention |
| b | 0.092 | 0.02 | 1.29 | 0.011 | 0.0013 | 0.0041 | 0.042 | 0.146 | 0.251 | - | B:0.0005 | 0.397 | Example of present invention |
| c | 0.091 | 0.02 | 1.49 | 0.010 | 0.0019 | 0.0045 | 0.038 | 0.107 | 0.278 | Nb:0.007 | Cr:0.01 | 0.385 | Example of present invention |
| d | 0.076 | 0.01 | 1.37 | 0.011 | 0.0027 | 0.0038 | 0.051 | 0.156 | 0.238 | - | Ca:0.02 | 0.394 | Example of present invention |
| e | 0.087 | 0.01 | 1.39 | 0.010 | 0.0017 | 0.0038 | 0.043 | 0.141 | 0.229 | - | - | 0.370 | Example of present invention |
| f | 0.106 | 0.03 | 1.19 | 0.013 | 0.0009 | 0.0034 | 0.043 | 0.154 | 0.248 | - | Sn:0.01,As:0.01 | 0.402 | Example of present invention |
| g | 0.115 | 0.01 | 1.37 | 0.011 | 0.0021 | 0.0036 | 0.042 | 0.125 | 0.283 | - | - | 0.408 | Example of present invention |
| h | 0.099 | 0.02 | 1.41 | 0.012 | 0.0008 | 0.0042 | 0.038 | 0.157 | 0.224 | - | W:0.02 | 0.381 | Example of present invention |
| i | 0.093 | 0.01 | 1.49 | 0.010 | 0.0016 | 0.0033 | 0.042 | 0.143 | 0.250 | - | Co:0.02,Ta:0.01 | 0.393 | Example of present invention |
| j | 0.123 | 0.02 | 1.47 | 0.011 | 0.0021 | 0.0039 | 0.045 | 0.111 | 0.256 | - | - | 0.367 | Example of present invention |
| k | 0.095 | 0.01 | 1.52 | 0.010 | 0.0014 | 0.0036 | 0.043 | 0.134 | 0.249 | - | Sb:0.01 | 0.383 | Example of present invention |
| l | 0.098 | 0.02 | 1.45 | 0.011 | 0.0011 | 0.0034 | 0.042 | 0.141 | 0.221 | - | Pb:0.01 | 0.362 | Example of present invention |
| m | 0.096 | 0.02 | 1.39 | 0.011 | 0.0013 | 0.0041 | 0.042 | 0.139 | 0.232 | Mo:0.005 | - | 0.371 | Example of present invention |
| n | 0.086 | 0.02 | 1.43 | 0.010 | 0.0021 | 0.0039 | 0.045 | 0.138 | 0.221 | - | Ni:0.01 | 0.359 | Example of present invention |
| o | 0.091 | 0.01 | 1.52 | 0.012 | 0.0034 | 0.0045 | 0.048 | 0.148 | 0.237 | - | Mg:0.01 | 0.385 | Example of present invention |
| p | 0.021 | 0.02 | 1.47 | 0.012 | 0.0025 | 0.0042 | 0.046 | 0.154 | 0.197 | - | - | 0.351 | Comparative example |
| q | 0.087 | 0.02 | 0.44 | 0.011 | 0.0011 | 0.0042 | 0.051 | 0.134 | 0.234 | - | - | 0.368 | Comparative example |
| r | 0.089 | 0.02 | 1.46 | 0.010 | 0.0023 | 0.0036 | 0.047 | 0.056 | 0.245 | - | - | 0.301 | Comparative example |
| s | 0.097 | 0.01 | 1.43 | 0.011 | 0.0009 | 0.0027 | 0.038 | 0.157 | 0.043 | - | - | 0.200 | Comparative example |
| t | 0.218 | 0.01 | 2.05 | 0.012 | 0.0009 | 0.0035 | 0.030 | 0.191 | 0.370 | - | - | 0.561 | Comparative example |

EP 2 759 613 B1

Table 2

Table 2

| Steel | Hot-rolling No. | Producing conditions of hot-rolled steel sheet | | | Remarks |
|---|---|---|---|---|---|
| | | Finish rolling temperature (°C) | Average cooling rate (°C/sec.) | Coiling temperature (°C) | |
| a | 1 | 921 | 30 | 625 | Example of present invention |
| | 2 | 923 | 35 | 755 | Comparative example |
| b | 3 | 922 | 35 | 630 | Example of present invention (plated sheet*2) |
| | 4 | 920 | 5 | 630 | Comparative example |
| c | 5 | 918 | 25 | 628 | Example of present invention (plated sheet*3) |
| | 6 | 878 | 30 | 619 | Comparative example |
| d | 7 | 907 | 35 | 645 | Example of present invention |
| | 8 | 908 | 35 | 510 | Comparative example |
| e | 9 | 913 | 35 | 640 | Example of present invention |
| f | 10 | 914 | 40 | 615 | Example of present invention |
| g | 11 | 918 | 40 | 623 | Example of present invention |
| h | 12 | 920 | 35 | 614 | Example of present invention |
| i | 13 | 920 | 35 | 623 | Example of present invention |
| j | 14 | 917 | 40 | 612 | Example of present invention |
| k | 15 | 917 | 40 | 612 | Example of present invention (plated sheet*4) |
| l | 16 | 905 | 40 | 628 | Example of present invention |
| m | 17 | 908 | 30 | 608 | Example of present invention |
| n | 18 | 912 | 35 | 611 | Example of present invention |
| o | 19 | 916 | 35 | 632 | Example of present invention |
| p | 20 | 918 | 40 | 609 | Comparative example |
| q | 21 | 921 | 40 | 605 | Comparative example |
| r | 22 | 918 | 35 | 612 | Comparative example |
| s | 23 | 906 | 35 | 622 | Comparative example |
| t | 24 | 905 | 35 | 620 | Comparative example |

*1: Average cooling rate from finish rolling temperature to coiling temperature (°C/sec.)
*2: Hot-dip galvanized steel sheet
*3: Hot-dip galvannealed steel sheet
*4: Hot-dip galvanized steel sheet

Specimens were extracted from the hot-rolled steel sheets (the hot-rolled steel sheets, hot-dip galvanized steel sheets, or the hot-dip galvannealed steel sheets) obtained as described above. Subsequently, a structure observation, a precipitation observation, chemical analysis, a tensile test, a hole expanding test, and a bending test were carried out so as to obtain an area ratio of ferrite phase, an average particle size and a volume fraction of the fine carbide containing Ti and V, a proportion of the number of carbides with particle size of 30 nm or more containing Ti with respect to the total number of carbides, a solid solution V content, a tensile strength, a hole expansion ratio (stretch-flange formability), and a limit ratio of bend radius (bending formability). The testing methods were as follows.

(i) Structure observation

A specimen was extracted from the obtained hot-rolled steel sheets. The cross section of the specimen in the rolling direction was mechanically polished and etched with nital. Subsequently, a structure photograph (a SEM photograph) taken with a scanning electron microscope (SEM) at a magnification of 3000 times was used to determine the ferrite phase, the type of structure other than the ferrite phase, and the area ratios of these structures by an image analysis device.

(ii) Precipitation observation

The thin film produced from the obtained hot-rolled steel sheet was observed through a transmission type electron microscope (TEM) at a magnification of 260000 times, so as to obtain an average particle size and a volume fraction of the fine carbide containing Ti and V.
Regarding the particle size of the fine carbide containing Ti and V, individual particle areas were obtained by image processing based on the observation result of 30 visual fields at a magnification of 260000 times, and the particle sizes were obtained using circular approximation. Subsequently, the arithmetic mean of the particle sizes of respective obtained particles was obtained as the average particle size.
Regarding the volume fraction of the fine carbide containing Ti and V, 10% acetylacetone-1% tetramethylammonium chloride-methanol solution (AA solution) was used to electrolyze a base iron. Subsequently, an extracted residue analysis was performed on filtrated residue so as to obtain the weight of the carbide containing Ti and V. The obtained weight was divided by a density of the carbide containing Ti and V so as to obtain the volume. This volume was divided by the volume of the dissolved base iron so as to obtain the volume fraction.
Regarding the density of the carbide containing Ti and V, density of TiC (4.25 g/cm$^3$) was corrected assuming that a part of Ti atom in TiC crystal was replaced by V atom. The density was thus obtained. That is, Ti and V in the carbide containing Ti and V were measured by extracted residue analysis, and a proportion of V replacing Ti was obtained. Thus, a correction was performed considering atomic weights of Ti and V.
A proportion of the number of carbides with particle size of 30 nm or more containing Ti (%) with respect to the total number of carbides was calculated as follows. The total number of carbides N (total) was obtained based on the TEM observation result of 30 visual fields at a magnification of 260000 times. Subsequently, the areas of the individual carbide particles were measured by image processing, and the particle sizes were calculated by circular approximation. Further, the number of carbides N (30) with particle size of 30 nm or more was obtained. Then, the proportion was calculated by N (30)/N (total) ×100 (%).

(iii) Chemical analysis

A specimen was extracted from the obtained hot-rolled steel sheets. The specimen was dissolved in electrolyte, and the electrolyte was employed as analysis solution. An amount of solid solution V was analyzed by inductively coupled plasma (ICP) atomic emission spectroscopy, ICP mass spectrometry, or atomic absorption analysis method.

(iv) Tensile test

From the center position and the one-quarter width position in the sheet width of the obtained hot-rolled steel sheets, JIS No. 5 tensile test specimens (JIS Z 2201) were extracted such that the tensile direction was perpendicular to the rolling direction. Subsequently, a tensile test was performed in compliance with the specification of JIS Z 2241 so as to measure a tensile strength (TS).

(v) Hole expanding test

From the center position and the one-quarter width position in the sheet width of the obtained hot-rolled steel sheets, a specimen (in the size of 130 mm × 130 mm) was extracted. In the specimen, a hole with an initial diameter $d_0$ of 10 mm φ was formed by punching processing with a punch. The hole expanding test was carried out using these specimens. A conical punch at a vertex angle of 60° was inserted into the hole so as to expand the hole. When a crack passed through the steel sheet (the specimen), a diameter "d" of the hole was measured to calculate a hole expansion ratio A (%) with the following formula.

$$\text{Hole expansion ratio } \lambda(\%) = \{(d - d_0)/d_0\} \times 100$$

(vi) Bending test

From the center portion and the one-quarter width position in the sheet width of the obtained hot-rolled steel sheets, a bending test specimen of width 50 mm and length 100 mm was extracted such that the longitudinal direction of the specimen was perpendicular to the rolling direction. Subsequently, a bending test was performed by a V-bending test in compliance with the specification of JIS Z 2248 (bend angle: 90°). Limit ratio of bend radius of the steel sheet, R/t, was calculated by dividing minimum bend radius R (mm) at which a crack is not initiated by a sheet thickness "t" (mm).

The obtained result was shown in Table 3.

Table 3

Table 3

| Steel | Hot-rolling No. | Type*5 | Area ratio of ferrite phase (%)*6 | Fine carbide containing Ti and V | | Proportion of the number of carbide with particle size of 30 nm or more containing Ti (%)*7 | Solid solution V (mass%) | Tensile strength TS (Mpa) | | Hole expansion ratio λ(%) | | Limit ratio of bend radius (R/t)*8 | | Remarks |
|---|---|---|---|---|---|---|---|---|---|---|---|---|---|---|
| | | | | Average particle size (nm) | Volume fraction | | | Width center portion | One-quarter width position | Width center portion | One-quarter width position | Width center portion | One-quarter width position | |
| a | 1 | F | 100 | 4 | 0.0057 | 4 | 0.061 | 1052 | 1055 | 45 | 43 | 0.89 | 0.87 | Example of present |
| | 2 | F | 100 | 15 | 0.0057 | 13 | 0.052 | 812 | 810 | 86 | 87 | 0.89 | 0.87 | Comparative example |
| b | 3 | F | 100 | 5 | 0.0064 | 5 | 0.057 | 1046 | 1042 | 46 | 45 | 0.81 | 0.86 | Example of present invention(plated sheet*2) |
| | 4 | F | 100 | 18 | 0.0064 | 11 | 0.064 | 801 | 782 | 85 | 87 | 0.89 | 0.74 | Comparative example |
| c | 5 | F | 100 | 4 | 0.0064 | 4 | 0.071 | 1032 | 1034 | 59 | 54 | 0.87 | 0.85 | Example of present invention(plated sheet*31 |
| | 6 | F | 100 | 9 | 0.0064 | 8 | 0.067 | 991 | 990 | 36 | 35 | 0.95 | 0.98 | Comparative example |
| d | 7 | F | 100 | 4 | 0.0058 | 3 | 0.058 | 1029 | 1027 | 47 | 50 | 0.81 | 0.79 | Example of present |
| | 8 | F | 100 | 5 | 0.0021 | 5 | 0.092 | 806 | 800 | 78 | 80 | 0.75 | 0.78 | Comparative example |
| e | 9 | F | 100 | 5 | 0.0061 | 3 | 0.054 | 1032 | 1034 | 59 | 54 | 0.87 | 0.85 | Example of present |
| f | 10 | F + B | 97 | 5 | 0.0074 | 4 | 0.075 | 1011 | 1016 | 46 | 43 | 0.74 | 0.76 | Example of present |

EP 2 759 613 B1

14

(continued)

| Steel | Hot-rolling No. | Type*5 | Area ratio of ferrite phase (%)*6 | Fine carbide containing Ti and V | | Proportion of the number of carbide with particle size of 30 nm or more containing Ti (%)*7 | Solid solution V (mass%) | Mechanical characteristics of hot-rolled steel sheet | | | | | | Remarks |
| | | | | | | | | Tensile strength TS (Mpa) | | Hole expansion ratio λ(%) | | Limit ratio of bend radius (R/t)*8 | | |
| | | | | Average particle size (nm) | Volume fraction | | | Width center portion | One-quarter width position | Width center portion | One-quarter width position | Width center portion | One-quarter width position | |
|---|---|---|---|---|---|---|---|---|---|---|---|---|---|---|
| g | 11 | F + P | 98 | 6 | 0.0081 | 3 | 0.068 | 1029 | 1027 | 47 | 50 | 0.81 | 0.79 | Example of present |
| h | 12 | F | 100 | 4 | 0.0069 | 8 | 0.061 | 998 | 1000 | 51 | 49 | 0.66 | 0.70 | Example of nresent |
| i | 13 | F | 100 | 4 | 0.0065 | 5 | 0.059 | 1016 | 1019 | 53 | 52 | 0.59 | 0.62 | Example of present |
| j | 14 | F + P | 98 | 5 | 0.0086 | 5 | 0.063 | 1008 | 1007 | 49 | 50 | 0.75 | 0.78 | Example of present |
| k | 15 | F | 100 | 6 | 0.0067 | 4 | 0.057 | 1003 | 1010 | 46 | 49 | 0.84 | 0.87 | Example of present invention (plated sheet*4) |
| l | 16 | F | 100 | 4 | 0.0069 | 3 | 0.055 | 1017 | 1021 | 46 | 45 | 0.73 | 0.81 | Example of present |
| m | 17 | F | 100 | 4 | 0.0067 | 7 | 0.058 | 997 | 999 | 54 | 57 | 0.87 | 0.84 | Example of present |
| n | 18 | F | 100 | 5 | 0.0060 | 4 | 0.063 | 1006 | 1010 | 51 | 55 | 0.68 | 0.74 | Example of present |
| o | 19 | F | 100 | 5 | 0.0064 | 3 | 0.052 | 1013 | 1012 | 49 | 51 | 0.71 | 0.77 | Example of present |
| p | 20 | F | 100 | 5 | 0.0015 | 6 | 0.021 | 756 | 689 | 82 | 95 | 1.35 | 1.39 | Comparative example |
| q | 21 | F | 100 | 18 | 0.0061 | 12 | 0.064 | 845 | 816 | 79 | 97 | 0.76 | 0.82 | Comparative example |

| Steel | Hot-rolling No. | Type*5 | Area ratio of ferrite phase (%)*6 | Fine carbide containing Ti and V | | Proportion of the number of carbide with particle size of 30 nm or more containing Ti (%)*7 | Solid solution V (mass%) | Tensile strength TS (Mpa) | | Hole expansion ratio λ(%) | | Limit ratio of bend radius (R/t)*8 | | Remarks |
|---|---|---|---|---|---|---|---|---|---|---|---|---|---|---|
| | | | | Average particle size (nm) | Volume fraction | | | Width center portion | One-quarter width position | Width center portion | One-quarter width position | Width center portion | One-quarter width position | |
| r | 22 | F+P | 98 | 4 | 0.0021 | 7 | 0.063 | 851 | 841 | 86 | 88 | 0.81 | 0.83 | Comparative example |
| s | 23 | F | 100 | 5 | 0.0034 | 6 | 0.019 | 869 | 847 | 27 | 39 | 1.24 | 1.49 | Comparative example |
| t | 24 | F + P | 93 | 4 | 0.0153 | 8 | 0.058 | 1103 | 950 | 38 | 58 | 0.68 | 0.71 | Comparative example |

*2: Hot-dip galvanized steel sheet
*3: Hot-dip galvannealed steel sheet
*4: Hot-dip galvanized steel sheet
*5: F denotes ferrite, P denotes pearlite, and B denotes bainite.
*6: Area ratio of ferrite phase with respect to overall structure (%)
*7: Proportion of the number of carbide with particle size of 30 nm or more with respect to the total number of carbide (%)
*8: R (minimum bend radius)/t (sheet thickness)

EP 2 759 613 B1

All the examples of the present invention are hot-rolled steel sheets that have both a high strength at a tensile strength of 980 MPa or more and excellent formability of a hole expansion ratio of λ: 40% or more and a limit ratio of bend radius of 0. 9 or less, thus ensuring excellent mechanical characteristics. Moreover, all the examples of the present invention are hot-rolled steel sheets that meet: a difference in strength between the center of the sheet width (a center portion) and a one-quarter width position of steel sheet is 15 MPa or less, a difference in hole expansion ratio between the center of the sheet width (the center portion) and the one-quarter width position of steel sheet is 10% or less, and a difference in limit ratio of bend radius is 0.15 or less. Thus, stability of the mechanical characteristics and uniformity in strength and formability are demonstrated.

On the other hand, the hot-rolled steel sheets of the comparative examples outside the scope of the present invention cannot achieve a desired tensile strength, hole expansion ratio, or limit ratio of bend radius, or causes a large difference in strength and formability in the steel sheet width direction.

**Claims**

1. A high strength hot rolled steel sheet, comprising:

    a chemical composition consisting of:

        C: more than 0.05% to 0.13% or less;
        Si: 0.3% or less;
        Mn: 0.5% or more to 2.0% or less;
        P: 0.025% or less;
        S: 0.005% or less;
        N: 0.0060% or less;
        Al: 0.1% or less;
        Ti: 0.07% or more to 0.18% or less; and
        V: more than 0.13% to 0.30% or less on a mass percent basis, such that Ti and V contents satisfy the following formula (1),

    wherein solid solution V: 0.05% or more to less than 0.15%,
    optionally at least one selected from the group consisting of Nb and Mo by 1% or less in total on a mass percent basis, and optionally at least one selected from the group consisting of Cu, Sn, Ni, Ca, Mg, Co, As, Cr, W, B, Pb, Ta, and Sb by 1% or less in total on a mass percent basis, and the balance being Fe and inevitable impurities,
    a matrix that has a ferrite phase with an area ratio of 95% or more with respect to an overall structure; and
    a structure where a fine carbide is dispersedly precipitated, the fine carbide containing Ti and V having an average particle size of less than 10 nm in the matrix,
    the fine carbide has a volume fraction of 0.0050 or more with respect to the overall structure,
    a proportion of a number of carbides with a particle size of 30 nm or more containing Ti is less than 10% with respect to a total number of carbides,
    the high strength hot rolled steel sheet has a tensile strength of 980 MPa or more,
    a hole expansion ratio of 40% or more, and
    a ratio of limit bending radius of 0.9 or less, and wherein
    a difference in a tensile strength between a center position of a sheet width and a position at one-quarter width of the steel sheet is 15 MPa or less, a difference in a hole expansion ratio among the positions is 10% or less, and a difference in a ratio of limit bending radius among the positions is 0.15 or less.

$$0.25 < Ti + V \leq 0.45 \ldots (1)$$

    (where Ti and V are respective contents of the elements (by mass%)).

2. The high strength hot rolled steel sheet according to claim 1, further comprising a plating layer formed at a surface of the high strength hot rolled steel sheet.

3. A method for producing a high strength hot rolled steel sheet with a tensile strength of 980 MPa or more, comprising:

17

preparing a steel material with a chemical composition according to claim 1 ;
hot-rolling the steel material including rough rolling and finish rolling at a rolling temperature of 880°C or more to form a hot-rolled steel sheet;
cooling the hot-rolled steel sheet at an average cooling rate of 10°C/sec. or more subsequent to completion of the finish rolling; and
coiling the hot-rolled steel sheet at 550°C or more to less than 700°C.

4. The method according to claim 3, further comprising
plating a surface of the hot-rolled steel sheet subsequent to the coiling.

**Patentansprüche**

1. Hochfestes warmgewalztes Stahlblech, umfassend:

eine chemische Zusammensetzung, bestehend aus:

C: mehr als 0,05% bis 0,13% oder weniger;
Si: 0,3% oder weniger;
Mn: 0,5% oder mehr bis 2,0% oder weniger;
P: 0,025% oder weniger;
S: 0,005% oder weniger;
N: 0,0060% oder weniger;
Al: 0,1% oder weniger;
Ti: 0,07% oder mehr bis 0,18% oder weniger; und
V: mehr als 0,13% bis 0,30% oder weniger auf Massenprozentbasis, so dass die Ti und V Gehalte die nachfolgende Gleichung (1) erfüllen,

wobei V in fester Lösung: 0,05% oder mehr bis weniger als 0,15%,
optional zumindest ein Element, ausgewählt aus der Gruppe bestehend aus Nb und Mo mit insgesamt 1% oder weniger auf Massenprozentbasis, und optional zumindest ein Element, ausgewählt aus der Gruppe bestehend aus Cu, Sn, Ni, Ca, Mg, Co, As, Cr, W, B, Pb, Ta, und Sb mit insgesamt 1% oder weniger auf Massenprozentbasis, und als Rest Fe und unvermeidbare Verunreinigungen,
eine Matrix, die eine Ferritphase mit einem Flächenverhältnis von 95% oder mehr bezogen auf das Gesamtgefüge aufweist; und
ein Gefüge, in dem feine Carbide dispergiert ausgeschieden sind, wobei die Ti und V enthaltenden feinen Carbide eine durchschnittliche Partikelgröße in der Matrix von weniger als 10 nm aufweisen,
die feinen Carbide einen Volumenanteil von 0,0050 oder mehr bezogen auf das Gesamtgefüge aufweisen,
der Anteil der Anzahl Titan enthaltender Carbide mit einer Partikelgröße von 30 nm oder mehr weniger als 10% bezogen auf die Gesamtzahl der Carbide beträgt,
das hochfeste warmgewalzte Stahlblech eine Zugfestigkeit von 980 MPa oder mehr,
ein Lochaufweitungsverhältnis von 40% oder mehr und
ein Grenzbiegeradiusverhältnis von 0,9 oder weniger aufweist, und wobei
die Differenz zwischen der Zugfestigkeit in einer zentralen Position der Blechbreite und einer Position bei einem Viertel der Breite des Stahlblechs 15 MPa oder weniger beträgt, die Differenz der Lochaufweitungsverhältnisse zwischen den Positionen 10% oder weniger beträgt und die Differenz der Grenzbiegeradiusverhältnisse zwischen den Positionen 0,15 oder weniger beträgt,

$$0,25 < Ti + V \leq 0,45 \ldots (1)$$

(wobei Ti und V die jeweiligen Gehalte der Elemente darstellen (in Massen%)).

2. Das hochfeste warmgewalzte Stahlblech gemäß Anspruch 1, weiterhin umfassend
eine Beschichtungsschicht, die auf einer Oberfläche des hochfesten warmgewalzten Stahlblechs ausgebildet ist.

3. Verfahren zur Herstellung eines hochfesten warmgewalzten Stahlblechs mit einer Zugfestigkeit von 980 MPa oder mehr, umfassend:

Vorbereiten eines Stahlmaterials mit einer chemischen Zusammensetzung gemäß Anspruch 1;
Warmwalzen des Stahlmaterials einschließlich Vorwalzen und Endwalzen bei einer Walztemperatur von 880°C oder mehr zum Bilden eines warmgewalzten Stahlblechs;
Kühlen des warmgewalzten Stahlblechs bei einer durchschnittlichen Abkühlgeschwindigkeit von 10°C/Sek. oder mehr im Anschluss an den Abschluss des Endwalzens; und
Aufwickeln des warmgewalzten Stahlblechs bei 550°C oder mehr bis weniger als 700°C.

4. Verfahren gemäß Anspruch 3, weiterhin umfassend

das Beschichten einer Oberfläche des warmgewalzten Stahlblechs im Anschluss an das Aufwickeln.

**Revendications**

1. Tôle en acier laminée à chaud de résistance à la traction élevée, comprenant :

une composition chimique constituée de :

C : de plus de 0,05 % à 0,13 % ou moins ;
Si : 0,3 % ou moins;
Mn : de 0,5 % ou plus à 2,0 % ou moins ;
P : 0,025 % ou moins;
S : 0,005 % ou moins ;
N : 0,0060 % ou moins ;
Al : 0,1 % ou moins;
Ti : de 0,07 % ou plus à 0,18 % ou moins ; et
V : de plus de 0,13 % à 0,30 % ou moins sur une base de pourcentage en masse, de sorte que les teneurs en Ti et V répondent à la formule suivante (1),

dans laquelle la solution solide V : de 0,05 % ou plus à moins de 0,15 %, éventuellement au moins un choisi dans le groupe constitué par Nb et Mo pour 1 % ou moins au total sur une base de pourcentage en masse, et éventuellement au moins un élément choisi dans le groupe constitué de Cu, Sn, Ni, Ca, Mg, Co, As, Cr, W, B, Pb, Ta, et Sb pour 1 % ou moins au total sur une base de pourcentage en masse, et le reste étant du Fe et des impuretés inévitables,
une matrice qui présente une phase de ferrite avec un rapport de surface de 95 % ou plus par rapport à une structure globale ; et
une structure où un carbure fin est précipité de manière dispersée, le carbure fin contenant du Ti et du V ayant une taille de particule moyenne de moins de 10 nm dans la matrice,
le carbure fin présente une fraction volumique de 0,0050 ou plus par rapport à la structure globale,
une proportion d'un nombre de carbures ayant une taille de particule de 30 nm ou plus contenant du Ti est inférieure à 10 % par rapport à un nombre total de carbures,
la tôle en acier laminée à chaud de résistance à la traction élevée présente une résistance à la traction de 980 MPa ou plus,
un rapport d'expansion de trou de 40 % ou plus, et
un rapport de rayon de courbure limite de 0,9 ou moins, et dans lequel une différence de résistance à la traction entre une position centrale d'une largeur de tôle et une position à un quart de largeur de la tôle en acier est de 15 MPa ou moins, une différence de rapport d'expansion de trou entre les positions est de 10 % ou moins, et une différence de rapport de rayon de courbure limite entre les positions est de 0,15 ou moins.

$$0,25 < Ti + V \leq 0,45 \dots (1)$$

(où Ti et V sont des teneurs respectives des éléments (en % en masse))

2. Tôle en acier laminée à chaud de résistance à la traction élevée selon la revendication 1, comprenant en outre

une couche de placage formée à une surface de la tôle en acier laminée à chaud de résistance à la traction élevée.

3. Procédé de production d'une tôle en acier laminée à chaud de résistance à la traction élevée ayant une résistance à la traction de 980 MPa ou plus, comprenant :

la préparation d'un matériau d'acier ayant une composition chimique selon la revendication 1 ;
le laminage à chaud du matériau d'acier, comprenant le laminage grossier et le laminage de finition à une température de laminage de 880°C ou plus pour former une tôle en acier laminée à chaud ;
le refroidissement de la tôle en acier laminée à chaud à une vitesse de refroidissement moyenne de 10°C/s. ou plus à la suite de l'achèvement du laminage de finition ; et
le bobinage de la tôle en acier laminée à chaud à 550°C ou plus, jusqu'à moins de 700°C.

4. Procédé selon la revendication 3, comprenant en outre le placage d'une surface de la tôle en acier laminée à chaud à la suite du bobinage.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011122031 A
- JP 2006161112 A
- JP 2009052139 A